# EUROPEAN PATENT SPECIFICATION

(11) **EP 0 456 440 B1**
(45) Date of publication and mention of the grant of the patent: **03.01.1996**
(21) Application number: 91304070.5
(22) Date of filing: 07.05.1991
(51) Int. Cl.: B29C 63/06

(54) **Pipe weld cover apparatus**
Vorrichtung zum Überdecken einer Rohrschweissnaht
Appareil pour recouvrir un cordon de soudure sur un tuyau

(30) Priority: 07.05.1990 US 519697
(43) Date of publication of application: 13.11.1991
(73) Proprietor: THE KENDALL COMPANY, Mansfield, Massachusetts 02048 (US)
(72) Inventor: Thomas, Samuel J., Lowell, Massachusetts 01852 (US); Hammond, Fred H., Jr., Wellesley, Massachusetts 02181 (US); Kellner, Jordan D., Wayland, Massachusetts 01778 (US)
(74) Representative: Kearney, Kevin David Nicholas

(56) References cited:
- DE-C- 3 639 417
- PATENT ABSTRACTS OF JAPAN vol. 12, no. 262 (M-721)(3109) 22 July 1988 & JP-A-63 047 123 (KAWASAKI STEEL CORP.) 27 February 1988

## Description

The present invention relates in general to a weld coating apparatus and more specifically to a pipe weld coating apparatus.

Pipes adapted for inground implantation are produced in three main ways.

In the first instance, a metal sheet is flatly extruded and formed into a tubular configuration by joining the adjacent sides and applying heat to the joint thereby forming a circular configuration having a longitudinal weld.

In the second instance the sheet is flatly extruded and spirally wound into a circular configuration having a spiral weld. Thereafter the adjoining sides are welded. The formed pipe is then cut into desired lengths. Thus welds are either longitudinal, spiral or a combination of both, given the manner of production.

In pipe systems involving tape coating, the aforementioned welds are sources for environmental degradation. When the pipe is wrapped with tape coating, voids along both sides of the weld are formed. These voids are entry ways for degradative environmental forces such as groundwater, bacteria, abrasives such as gravel, sand, etc.

JP-A-63-047-123 discloses an apparatus provided with sensor means detecting the location of the weld and causing dispensing means to dispense resin on the weld, thereby slowing down the rotation of the pipe.

Thus it is a primary objective of the present invention to alleviate voids and secure a tight bond between the tape coating and the metal pipe thereby increasing the pipe's longevity.

Accordingly, the task of the present invention simply stated is to provide a weld cover apparatus comprising a sensor and an associated resin dispenser wherein the said sensor locates a weld, transmits the said information to the said dispenser and actuates the said dispenser to dispense a resin onto the said weld so as to flatten the weld projection thereby allowing for uniform and uninterrupted surface contact with a later applied tape coating system.

The invention may be put into practice in various ways and two specific embodiments will be described by way of example to illustrate the invention with reference to the accompanying drawings in which :
Figure 1 is a perspective view of a first embodiment of the invention, and
Figure 2 is a perspective view of a second embodiment of the invention.

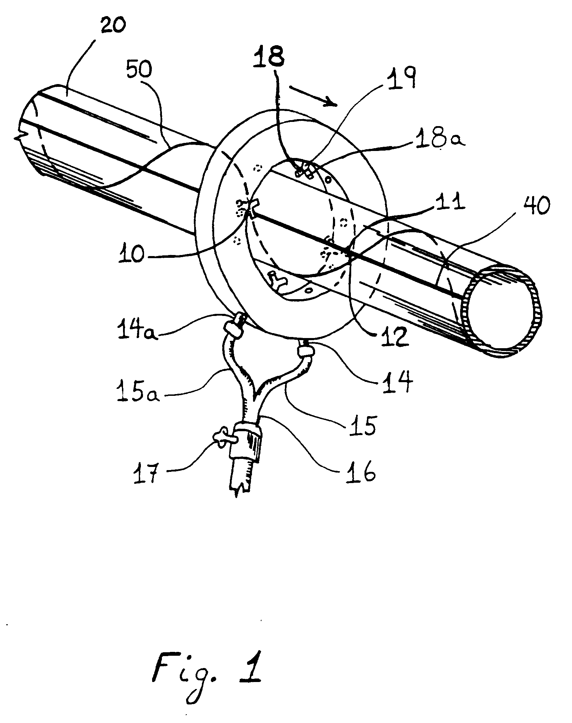

Figure 1 illustrates an embodiment of the invention comprising mechanical actuating means 10, comprising a dispenser 12 closely preceded by a sensor 11. The sensor 11 includes any of the well known retractable projection mechanisms which when retracted actuate the opening of the dispensing means 12. The simplest of such mechanisms are referred to in the art as "trap door mechanisms". By way of illustration and not limitation, mention may be made of direct or indirect connecting means such as valves, levers etc.

In sum, any mechanism which involves the retraction of a projection to cause the opening of a dispenser is considered by the present invention. These mechanisms are well known to a person skilled in the art and as such comprise no part of this invention.

The dispenser 12, in Figure 1 is preferably located in close proximity to the sensor 11 so as to minimise the relay time. In the preferred embodiment the sensor 11 and the dispenser 12 are located on a single apparatus 13, shaped to conform to the pipe 20. In addition, on the preferred embodiment each dispenser 12 employs two dispenser heads 18 and 18(a) respectively adapted for placement around the weld so as to fill the voids on either side of the said weld to maximise full and continuous surface contact between the pipe and the tape coating. The dispenser heads 18 and 18(a) may be rotably mounted on a dispenser base 19 so as to adjust positioning of the heads along both sides of the weld when actuated by the sensor 11.

The tubular apparatus 13 houses a liquid resin coating. While Figure 1 illustrates one embodiment wherein the apparatus 13 is a continuous circle, another embodiment (not shown) provides for apparatus 13 to comprise two substantially equal arcuate arms, each of which is approximately half the circumference of a circle adapted for placement around a pipe, the arcuate arms being pivotable between an open position for placement around a pipe and a closed position to surround the circumference of the pipe.

In either embodiment the apparatus 13, is attached to feed arms 14 and 14(a) for transmitting the said liquid into the apparatus 13 for application to the pipe surface. As shown, the feed arms 14 and 14(a), are connected to leading ends 15 and 15(a) respectively of a bifurcated flexible hose 16, the trailing end of which (not shown) is connected to a liquid resin reservoir (not shown). A shut-off valve 17, of per se known construction is provided to control liquid resin delivery to the apparatus 13.

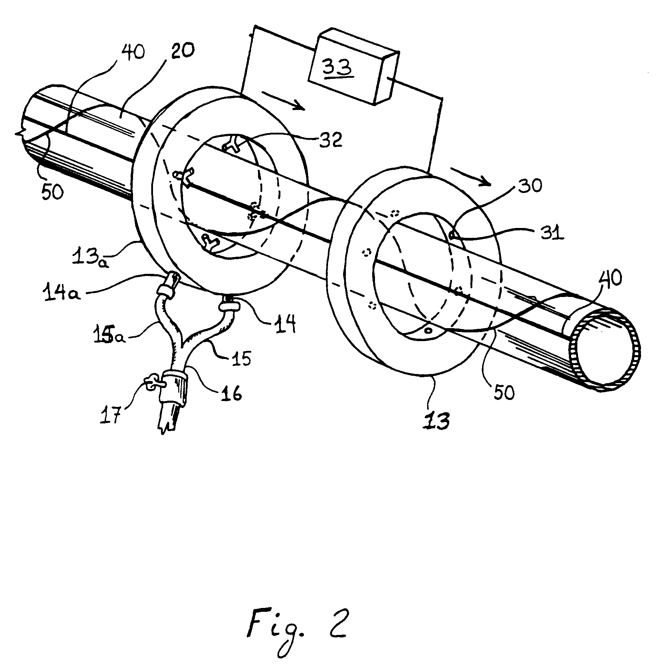

Figure 2 illustrates a second embodiment of the present invention incorporating electronic sensing means 30. Any of the per se known electronic sensing means are contemplated by the present invention. Thus, by way of illustration and not limitation, when the sensor 31 and the dispenser 32 are located in close proximity, the sensor 31 may be an electronic eye or a laser detecting means 32. When the sensor 30 is located a distance before the dispenser 32, an intermediately positioned microprocessor 33 is necessitated to provide for sufficient relay memory. The microprocessor 33, may be selected from any of the well known microprocessing means which are capable of being programmed to receive location data regarding the weld 40 or 50, relaying the said location data to the dispenser 32 and actuating dispensing. Given the numerous microprocessing means available on the market, a person skilled in the art would readily find suitable microprocessing means without undue experimentation and therefore such means comprise no part of the applicant's invention.

Figure 2 further illustrates that the sensor 31 and the dispenser 32 may be located on two different tubular apparatus, 13 and 13(a). If so, feed arms 14 and 14(a), leadings ends 15 and 15(a) hose 16, and valve 17 are only connected to tubular apparatus 13(a) and not 13. In other words, the additional equipment necessary for introducing the said liquid resin is only attached to the tubular apparatus if it comprises dispensing means.

In operation the sensor means 11 or 31 will detect a longitudinal weld 40 and/or a spiral weld 50, relay the said location to the dispensing means 12 or 32 and actuate the said means to dispense a liquid resin. In the preferred embodiment, the dispensing means 12 and 32, comprise a double-headed dispenser to fit over and fill both sides of a weld thereby assuring and maximising continuous and optimal surface contact with the interior surface of a tape coating to be applied to the exterior surface of pipe 20. In still a further preferred embodiment, the said double headed dispensing means are rotably mounted on a base 19, and responsive to location data transmitted by the sensing means 11 or 31.

Since certain changes may be made without departing from the scope of the invention herein involved, it is therefore intended that all matter described in the foregoing specification and drawings shall be interpreted as illustrative and not in a limiting sense.

## Claims

1. Apparatus for covering the welds in a pipe comprising a weld sensor means (11,31) and resin dispensing means (12,32), the weld sensing means being arranged to cause the dispensing means to dispense resin onto the weld (50) when a weld is located, characterised in that the dispensing means (18,18a) are arranged to apply resin to both sides of the weld line (50).

2. A pipe weld cover apparatus as claimed in claim 1 characterised in that it comprises:
(a) a weld sensor (11,31); and
(b) a resin dispenser (12,32) preceded by the said weld sensor (11,31) and actuated by the said sensor to dispense the said resin over a pipe weld (50) thereby maximising surface contact between the pipe surface and an outer tape coating;
the said sensor and the said dispenser being located on the inner surface of a tubular apparatus (13,13a) adapted for placement around the said pipe.

3. Apparatus as claimed in claim 1 or claim 2 characterised in that the said sensor has a corresponding dispenser.

4. Apparatus as claimed in claim 1, 2 or 3 characterised in that the said tubular apparatus comprises a plurality of corresponding dispensers and sensors thereby allowing each sensor to actuate a corresponding dispenser.

5. Apparatus as claimed in claim 1, 2, 3 or 4 characterised in that the said dispenser is preceded by the said sensor.

6. Apparatus as claimed in claim 1, 2, 3, 4 or 5 characterised in that the said dispenser (18,18a) is double headed in order to dispense on both sides of the said weld.

7. Apparatus as claimed in anyone of claims 1 to 6 characterised in that the said sensor (11) comprises retractable projections which recede when contacting the said weld thereby actuating the said dispenser to dispense the said resin.

8. Apparatus as claimed in anyone of claims 1 to 6 characterised in that the said sensor (31) comprises electronic detecting means which actuate one or more corresponding dispensers to dispense.

9. Apparatus as claimed in anyone of claims 1 to 8 characterised in that the sensor contains a microprocessor (33) programmed to sense one or more welds, transmit the location to said dispenser and actuate dispensing.

10. Apparatus as claimed in anyone of claims 1 to 9 characterised in that the said sensor (31) is located on one tubular apparatus (13) adapted for placement around a pipe, and the said dispenser (32) is located on a second tubular apparatus (13a) for placement around a pipe.

## Patentansprüche

1. Vorrichtung zum Überziehen der Schweißstellen eines Rohres, mit einer Schweißstellen-Sensoreinrichtung (11, 31) und einer Kunstharz-Abgabeeinrichtung (12, 32), wobei die Schweißstellen-Sensoreinrichtung zur Steuerung der Abgabeeinrichtung bei einer erfaßten Schweißstelle zur Abgabe von Kunstharz auf die Schweißstelle (50) ausgebildet ist, dadurch gekennzeichnet, daß die Abgabeeinrichtung (18, 18a) zum Auftragen des Kunstharzes zu beiden Seiten der Schweißnaht (50) ausgebildet ist.

2. Rohrschweißstellen-Überzugsvorrichtung nach Anspruch 1, gekennzeichnet durch:
(a) einen Schweißstellen-Sensor (11, 31) und
(b) eine Kunstharz-Abgabeeinrichtung (12, 32), die dem Schweißstellen-Sensor (11, 31) folgt und von dem Sensor zur Abgabe des Kunstharzes auf eine Rohrschweißstelle betätigt ist, wodurch der Oberflächenkontakt zwischen Rohroberfläche und einem äußeren Bandüberzug maximiert wird, wobei der Sensor und die Abgabeeinrichtung an der Innenseite einer rohrförmigen Vorrichtung (13, 13a) angeordnet sind, die zum Anordnen rund um das Rohr ausgebildet ist.

3. Vorrichtung nach Anspruch 1 oder 2, dadurch gekennzeichnet, daß der Sensor eine entsprechende Abgabeeinrichtung hat.

4. Vorrichtung nach Anspruch 1, 2 oder 3, dadurch gekennzeichnet, daß die rohrförmige Vorrichtung mehrere entsprechende Abgabeeinrichtungen und Sensoren aufweist, wodurch die Betätigung einer entsprechenden Abgabeeinrichtung durch den jeweiligen Sensor ermöglicht ist.

5. Vorrichtung nach Anspruch 1, 2, 3 oder 4, dadurch gekennzeichnet, daß die Abgabeeinrichtung dem Sensor folgt.

6. Vorrichtung nach Anspruch 1, 2, 3, 4 oder 5, dadurch gekennzeichnet, daß die Abgabeeinrichtung (18, 18a) zwei Köpfe zur Abgabe auf beide Seiten der Schweißstelle aufweist.

7. Vorrichtung nach den Ansprüchen 1 bis 6, dadurch gekennzeichnet, daß der Sensor (11) zurückziehbare Vorsprünge aufweist, die sich bei Kontakt mit der Schweißstelle zurückziehen und hiedurch die Abgabeeinrichtung zur Abgabe des Kunstharzes betätigen.

8. Vorrichtung nach den Ansprüchen 1 bis 6, dadurch gekennzeichnet, daß der Sensor (31) eine elektronische Detektoreinrichtung aufweist, die eine oder mehrere Abgabeeinrichtungen zur Abgabe betätigt.

9. Vorrichtung nach den Ansprüchen 1 bis 8, dadurch gekennzeichnet, daß der Sensor einen Mikroprozessor (33) enthält, der zur Erfassung einer oder mehrerer Schweißstellen, zur Übertragung der Stelle an die Abgabeeinrichtung und zur Betätigung der Abgabe programmiert ist.

10. Vorrichtung nach den Ansprüchen 1 bis 9, dadurch gekennzeichnet, daß der Sensor (31) an einer zum Anordnen rund um ein Rohr ausgebildeten rohrförmigen Vorrichtung (13) angeordnet ist und die Abgabeeinrichtung (32) an einer zweiten zum Anordnen rund um ein Rohr ausgebildeten rohrförmigen Vorrichtung (13a) angeordnet ist.

## Revendications

1. Appareil pour recouvrir les soudures dans un tuyau, comportant un moyen de détecteur de soudure (11, 31) et un moyen de distribution de résine (12, 32), le moyen de détecteur de soudure étant agencé de telle sorte que le moyen de distribution de résine distribue de la résine sur la soudure (50) lorsqu'une soudure est localisée, caractérisé en ce que les moyens de distribution (18, 18a) sont agencés de manière à appliquer de la résine des deux côtés du cordon de soudure (50).

2. Appareil pour recouvrir une soudure de tuyau selon la revendication 1, caractérisé en ce qu'il comporte:
(a) un détecteur de soudure (11, 31); et
(b) un distributeur de résine (12, 32) précédé par ledit détecteur et actionné par ledit détecteur pour distribuer ladite résine sur une soudure de tuyau (50), maximisant de la sorte une surface de contact entre la surface du tuyau et une bande de couverture externe; ledit détecteur et ledit distributeur étant situés sur la surface interne d'un appareil tubulaire (13, 13a) adapté pour être placé autour dudit tuyau.

3. Appareil selon la revendication 1 ou la revendication 2, caractérisé en ce que ledit détecteur présente un distributeur correspondant.

4. Appareil selon la revendication 1, 2 ou 3, caractérisé en ce que ledit appareil tubulaire comporte une pluralité de distributeurs et détecteurs correspondants permettant de cette manière à chaque détecteur de actionner un distributeur correspondant.

5. Appareil selon la revendication 1, 2, 3 ou 4, caractérisé en ce que ledit distributeur est précédé par ledit détecteur.

6. Appareil selon la revendication 1, 2, 3, 4 ou 5, caractérisé en ce que ledit distributeur (18, 18a) présente une double tête de manière à distribuer des deux côtés de ladite soudure.

7. Appareil selon l'une quelconque des revendications 1 à 6, caractérisé en ce que ledit détecteur (11) comporte des saillies rétractables qui se retirent lorsqu'elles entrent en contact avec ladite soudure, ordonnant de la sorte au distributeur de distribuer ladite résine.

8. Appareil selon l'une quelconque des revendications 1 à 6, caractérisé en ce que ledit détecteur (31) comporte un moyen de détection électronique qui actionne un ou plusieurs distributeurs correspondants pour la distribution.

9. Appareil selon l'une quelconque des revendications 1 à 8, caractérisé en ce que le détecteur contient un microprocesseur (33) programmé pour détecter une ou plusieurs soudures, pour transmettre la position audit distributeur et pour actionner la distribution.

10. Appareil selon l'une quelconque des revendications 1 à 9 caractérisé en ce que ledit détecteur (31) est placé sur un appareil tubulaire (13) adapté pour être placé autour d'un tuyau, et ledit distributeur est placé sur un deuxième appareil tubulaire pour être placé autour d'un tuyau.
